# EUROPEAN PATENT APPLICATION

(11) **EP 4 797 079 A1**
(43) Date of publication of application: **26.08.2026**
(21) Application number: 25159835.5
(22) Date of filing: 25.02.2025
(51) Int. Cl.: G06F 8/72, G06N 20/00, G06F 8/74, G06F 8/36

(54) **SYSTEM AND METHOD FOR PROCESSING A SOFTWARE**

(71) Applicant: Siemens Aktiengesellschaft, 80333 München (DE)
(72) Inventor: Singh, Saurabh Narayan, 81739 München (DE)
(74) Representative: Siemens Patent Attorneys

(57) **Abstract**

The invention provides a system (100) and a computer-implemented method for processing of a given software (SW). The system comprises:
- an interface (101) configured to receive a request message (RM) provided in natural language, wherein the request message (RM) comprises at least one request for identifying at least one separate software component of the given software considering a given software architecture,
- a first data collection unit (102) configured to collect frontend data (FD) when running the software,
- a second data collection unit (103) configured to collect backend data (BD) when running the software,
- a processing unit (104) that is configured to run an artificial intelligence model (AIM), wherein the artificial intelligence model is configured to process the request message (RM) using the collected frontend (FD) and backend data (BD) and to return a new software architecture diagram (SAD and respective software code (CD) comprising at least one identified software component (COMP), wherein the new software code (CD) is provided according to the specified software architecture (SAD),
and
- an output unit (105) configured to provide the new software architecture diagram (SAD) and the respective software code (CD) comprising the at least one identified software component (COMP).

## Description

The present invention relates to a system and a computer-implemented method for processing a given software, as well as a computer program product.

Software architecture management usually requires expert knowledge and/or is a resource and/or expertise intensive process. For example, when migrating a monolith software to cloud or breaking it down to a service-based architecture or microservices, it is important to understand and identify suitable end points and functions of said software.

It is an objective of the present invention to provide a system and method to improve software architecture evolution and/or management.

The object is solved by the features of the independent claims. The dependent claims contain further developments of the invention.

The invention provides according to the first aspect a system for processing of a given software, the system comprising:
- an interface configured to receive a request message provided in natural language, wherein the request message comprises at least one request for identifying at least one separate software component of the given software considering a given software architecture,
- a first data collection unit configured to collect frontend data when running the software,
- a second data collection unit configured to collect backend data when running the software,
- a processing unit that is configured to run an artificial intelligence model, wherein the artificial intelligence model is configured to process the request message using the collected frontend and backend data and to return a new software architecture diagram and respective software code comprising at least one identified software component, wherein the new software code is provided according to the specified software architecture,
   and
- an output unit configured to provide the new software architecture diagram and the respective software code comprising the at least one identified software component.

A "request message" provided in natural language can be also understood as a prompt. The request message can for example be provided by a user, e.g., a software engineer.

"Frontend data" can be understood as data related to functionalities of a given software that are being triggered by a user through a user interface (UI). For example, each data input provided by a user or interaction with the software through an UI, such as clicking on a button, can be tracked by the first data collection unit.

"Backend data" can be understood as data and/or variables that are transferred between functions of the given software, as well as their relations and dependencies. For example, the second data collection unit can perform a dynamic software code analysis over the compiler and/or over the execution of the software code to provide the backend data.

The proposed system can be implemented as a software architecture co-pilot based on an artificial intelligence model, as for example a large-language-model (LLM). The system can support the evolution of a given software between different architecture paradigms. For example, the system supports users to change a monolith software code into services and/or microservices. It is an advantage of the proposed invention to automate the process of software architecture evolution and refactoring. Furthermore, the system combines static and dynamic analysis of code, along with machine learning to provide a support system, e.g., a co-pilot based on LLM, for software architecture. The system works for different applications and software architecture paradigms, as frontend and backend data provide the relevant context. Therefore, the system improves the efficiency of software development and software architecture.

According to a preferred embodiment of the invention the artificial intelligence model may be further configured to return data that is processed by the at least one identified software component.

According to a preferred embodiment of the invention the output unit may be further configured to provide the data that is processed by the at least one identified software component.

Preferably, the data that is transferred from one to another identified component can also be provided as output.

According to a preferred embodiment of the invention the artificial intelligence model may be a large-language-model (LLM).

According to another embodiment of the invention the artificial intelligence model may be trained based on training data comprising various software examples and respective software architecture diagrams.

Furthermore, by providing additional context information according to the given software, the artificial intelligence model can be further improved.

According to another embodiment of the invention the request message may define which type of software component of the given software should be identified.

According to another embodiment of the invention the frontend data may comprise information about at least one function called through a user interface when running the software.

According to another embodiment of the invention the backend data may comprise information about the workflow and dependencies of the at least one function.

According to another embodiment of the invention the frontend and/or backend data are stored in a vector database.

According to a second aspect, the invention provides a computer-implemented method for processing a given software, the method comprising the steps:
- receiving a request message provided in natural language, wherein the request message comprises at least one request for identifying at least one separate software component of the given software considering a given software architecture,
- collecting frontend data when running the software,
- collecting backend data when running the software,
- running an artificial intelligence model, wherein the artificial intelligence model is configured to process the request message using the collected frontend and backend data,
- returning by the artificial intelligence model a new software architecture diagram and respective software code comprising at least one identified software component, wherein the new software code is provided according to the specified software architecture,
   and
- providing the new software architecture diagram and the respective software code comprising the at least one identified software component.

In addition, a computer program product (non-transitory computer readable storage medium having instructions, which when executed by a processor, performs actions) is claimed having program instructions for performing the aforementioned method.

The invention will be explained in more detail by reference to the accompanying figures.
- Fig. 1:: shows an exemplary embodiment of a system for processing a given software; and
- Fig. 2:: shows an exemplary embodiment of a computer-implemented method for processing a given software.

Equivalent parts in the different figures are labeled with the same reference signs.

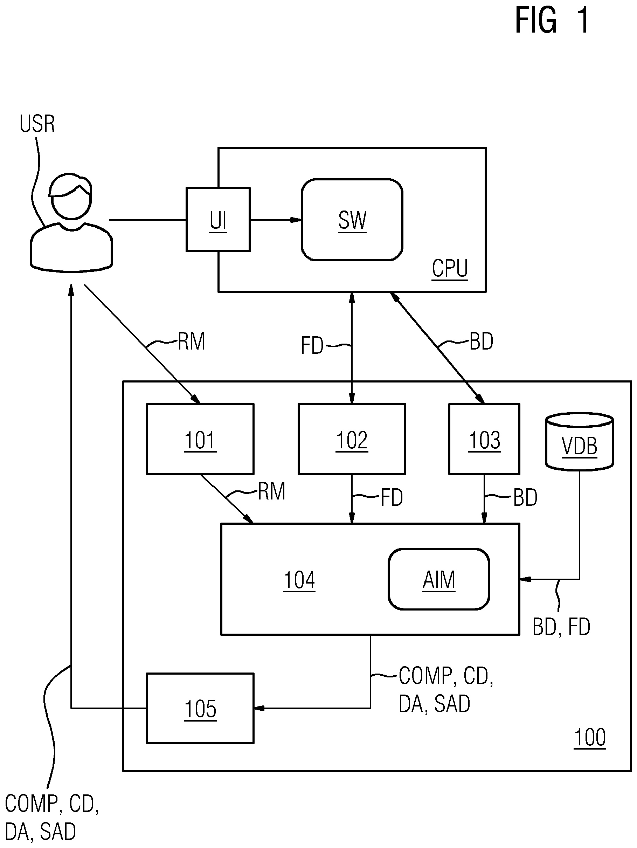

Figure 1 shows a first exemplary embodiment of a system 100 for processing a given software SW. The system 100 can be for example understood as a support system for a user/a software engineer USR and can be implemented as a software architecture co-pilot.

The system 100 may combine a data driven design, a machine learning model trained on programming languages, code and architecture documents, and natural language processing. In that way, the system can be trained as a software architecture copilot. This copilot can for example guide software architects and software developers during the process of software evolution, e.g., transforming a monolith software to a micro service architecture.

The system 100 comprises an interface 101 for data input by the user USR, a first data collection unit 102, a second data collection unit 103, a processing unit 104, and an output unit 105.

Furthermore, the system 100 comprises or can access via the processing unit 104 an artificial intelligence (AI) model AIM. To this end, the Al model AIM is preferably pre-trained and/or tuned based on training data. The training may adapt an initial Al model such that given certain input data, the trained Al model outputs given output data. The training data comprise various software examples, respective software architecture documents, architecture diagrams, architecture design patterns, reference architectures and/or architecture documents specifying best practices. This data can be for example collected from a public code repository. If the model needs to be trained for a domain specific language, or a custom implementation, then the relevant data can be provided for the training. In other words, the Al model is preferably trained based on a given software code base with various implementation code examples, as well as language tokens that are capable of providing suggestions in natural language. Therefore, the Al model AIM can be a pretrained large-language-model (LLM) wherein the LLM is tuned either by fine tuning it completely, or by using parameter efficient fine tuning (PeFT).

The system 100 is configured to support a user USR when evolving a given software code SW. Via a user interface UI the USR provides a request message RM in natural language. The request message RM comprises at least one request for identifying at least one separate software component of the given software SW considering a given software architecture. The request message RM can further define which type of software component of the given software should be identified.

For example, the user USR provides as request message to the Al model, also referred to as context specific request/prompt: "I want to identify independent services within my code", "I want to break those services into APIs", "I want to use an event based/micro service based/Service oriented architecture", "I want to migrate to technology X in my new architecture" or "I want to move my software to cloud".

The software code SW can be run on a computing unit/processor CPU. The computing unit CPU can be also part of the system 100. The computing unit CPU is preferably connected to the first data collection unit 102 and to the second data collection unit 103. Therefore, when running the software code SW on the computing unit CPU, the first data collection unit 101 and the second data collection unit 102 can track information and collect frontend data and backend data, respectively.

The first data collection unit 102 is configured to collect frontend data FD when running the software SW. The frontend data FD comprise information about at least one function called by the user USR through a user interface UI when running the software. The first data collection unit 102 for example identifies and tracks every time a user USR clicks a button and/or enters data.

The second data collection unit 103 is configured to collect backend data BD when running the software SW. The backend data BD comprise information about the workflow and dependencies of the at least one function that is called by the user USR.

The second data collection unit 103 is for example running at the backend of the application and maps each function that is called when a button was clicked or data was provided on the user interface UI.

When mapping for example the first function that was called, potential API endpoints can be identified. The second data collection unit 103 can also identify subsequent functions that are called by the first function, in order to identify dependencies. Furthermore, the second data collection unit 103 can track variable states that are changed through the stack trace in order to identify used or unused variables and their relation to the function lifecycle. The backend data BD can further comprise information about code snippets within an entire function which are executed, and/or which code snippets were not executed. This enables for example a clear demarcation of responsibilities inside complex functions.

Therefore, the frontend data FD and the backend data BD preferably comprise information regarding the function workflow of various functions. When a function is called multiple times, over a period, a cumulative workflow of a function can be identified. The frontend data FD and/or the backend data BD can be stored in a vector database VDB. Vector database stores vector embeddings enabling faster retrieval and similarity search. This enables fast retrieving the frontend and backend information related to a given software SW for providing context data to the Al model AIM when requesting processing of said software SW.

Preferably, individual workflows are stored as entries in the vector database VDB. These embeddings signify not only the semantics of the software code, but the intention of the software code as well.

It is possible to either execute the collection of frontend data FD and backend data BD each time a software SW is processed by the system 100 and provide them to the processing unit 104. Alternatively, it is possible to execute the frontend and backend data collection only once, store the frontend data FD and the backend data BD in the vector database VDB and then retrieve the frontend data FD and backend data BD from the vector data base VDB when processing the software SW by the system 100 and provide them to the processing unit 104.

The frontend data FD and the backend data BD are provided to the processing unit 104 that is configured to run the Al model AIM, wherein the Al model AIM is configured to process the request message RM from the user USR using the provided frontend FD and/or backend data BD and to return a new software architecture diagram SAD and respective software code CD comprising at least one identified software component COMP, wherein the new software code CD is provided according to the software architecture that is specified in the request message RM.

Using the frontend data FD and the backend data BD, the Al model can identify workflows and their interdependencies. The identified workflows and information can be for example converted to Unified Modeling Language (UML) diagrams, that can help to understand the design, code architecture, and implementation of complex software.

The processing of a given software SW by the system 100 can be illustrated by the following example. A user USR provides as request message/prompt RM to the processing unit 104: "I want to identify independent services within my code.", wherein the provided context is the given software SQ with a monolithic codebase, further providing respective frontend data FD and backend data BD for said software. The prompt RM is provided to the Al model AIM, preferably a pre-trained LLM. The first data collecting unit 102 identifies various features invoked by the user USR, such as for example: (i) Which features were invoked by users: Provides the starting point of various APIs. (ii) How many times were the features invoked: Provides the priority of the API development. For example, a feature that is clicked 200 times a day has a higher priority to be turned into an API than a feature that is used once a month. It also provides priority for removing a feature for future refactoring. The second data collection unit 103 provides backend data BD that identifies various workflows involved with the features: (i) Feature 1 -> Invokes Method 1 with parameters a,b,c -> Invokes Method 2 with parameter b,c -> Invokes Method 3 with parameter (b+c); (ii) Feature 1 -> Invokes Method 2 with parameters b,c -> Invokes Method 3; (iii) Feature 2 -> Invokes Method 4 with parameter d -> Invokes Method 3 with parameter d; (iv) Feature 3 -> Invokes Method 2 with parameters -> Invokes Method 5. Based on this backend data BD, following conclusions can be drawn by the Al model: (i) Create separate exposed services for Method 1, 2 and 4; (ii) Method 3 is an internal service; (iii) Method 1 can be refactored and Feature 1 can call Method 2 directly with the refactored code.

The output unit 105 is configured to provide the new software architecture diagram SAD and the respective software code CD comprising the at least one identified software component COMP. Furthermore, the output unit 105 can provide the data DA that is processed by the at least one identified software component.

Therefore, the system 100 can for example provide a new architecture diagram, with methods and services identified which can be separated in micro services. Additionally, the data that needs to move across the services is also identified and provided as the output to the architect. The system 100 can also guide the software evolution through natural language support. Based on the UML, the software architect can for example ask specific questions regarding methods and services to understand the reasoning as well as improve the initial design.

For migration to different technologies, technology specific patterns can be applied to the suggested architecture. For example, to migrate to cloud, the system 100 can suggest different services for the identified architecture. Specific storage services, specific serverless patterns, specific compute services, and even their respective compute capacities can be suggested by the system 100 based on the data it has collected.

The Al model AIM can either be used pre-trained or training can be done as follows. First, an initial Al model is created to learn on certain parameters and tokens. Then, this Al model is trained based on code bases and/or software architecture documents, e.g., from public repositories. In case, the respective software SW is based on a particular programming language, the training data can be restricted to that programming language. Furthermore, design patterns specific to the programming language and unique applications can be used as a secondary data set for the training of the Al model. After every subsequent training, fine tuning of the Al model may be performed on a selected subset of the parameters to optimize the performance of the Al model AIM. Fine tuning of the Al model AIM can be based on specific tasks and inputs. For example, using the frontend data FD and backend data BD as context, the Al model AIM can be further improved. Based on this specific input, the Al model can learn further in a supervised manner the expected outcomes. The trained and fine-tuned Al model can then be evaluated based on evaluation metrics and KPIs.

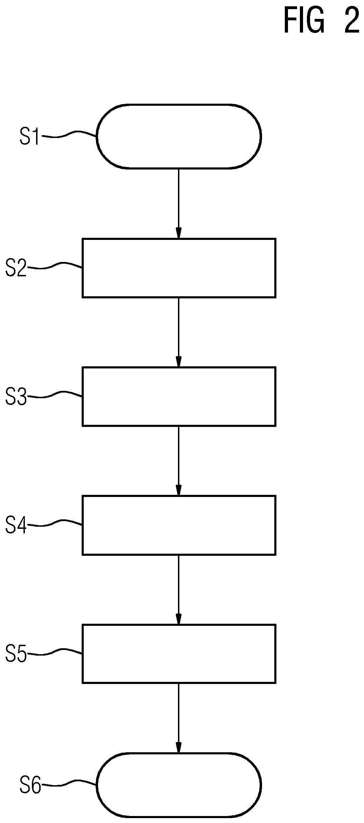

Figure 2 shows an exemplary embodiment of a computer-implemented method for processing a given software.

The method comprises the steps:
As first step S1 a request message is received, wherein the request message is provided in natural language and comprises at least one request for identifying at least one separate software component of the given software considering a given software architecture.

In a next step S2, frontend data are collected when running the software or alternatively retrieved from a vector database.

In a next step S3 backend data are collected when running the software or alternatively retrieved from a vector database.

In a next step S4 an artificial intelligence model (Al model) is run, wherein the artificial intelligence model is preferably a large-language model and is configured to process the request message using the collected frontend data and backend data.

In a next step a new software architecture diagram and respective software code is returned by the Al model, wherein the new software code comprises the at least one identified software component and the new software code is provided according to the specified software architecture.

In the next step S6 the new software architecture diagram and the respective software code, comprising the at least one identified software component, are provided.

All of the described and/or drawn features as shown by the embodiments can be advantageously combined within the scope of the invention.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. System (100) for processing of a given software (SW), the system comprising:
- an interface (101) configured to receive a request message (RM) provided in natural language, wherein the request message comprises at least one request for identifying at least one separate software component of the given software considering a given software architecture,
- a first data collection unit (102) configured to collect frontend data (FD) when running the software (SW),
- a second data collection unit (103) configured to collect backend data (BD) when running the software (SW),
- a processing unit (104) that is configured to run an artificial intelligence model (AIM), wherein the artificial intelligence model (AIM) is configured to process the request message (RM) using the collected frontend (FD) and/or backend data (BD) and to return a new software architecture diagram (SAD) and respective software code (CD) comprising at least one identified software component (COMP), wherein the new software code (CD) is provided according to the specified software architecture,
and
- an output unit (105) configured to provide the new software architecture diagram (SAD) and the respective software code (CD) comprising the at least one identified software component (COMP).

2. System (100) according to claim 1, wherein the artificial intelligence model (AIM) is further configured to return data (DA) that is processed by the at least one identified software component.

3. System (100) according to claim 2, wherein the output unit (105) is further configured to provide the data (DA) that is processed by the at least one identified software component.

4. System (100) according to claim 1 or 2, wherein the artificial intelligence model (AIM) is a large-language-model.

5. System (100) according to one of the preceding claims, wherein the artificial intelligence model (AIM) is trained based on training data comprising various software examples and respective software architecture diagrams.

6. System (100) according to one of the preceding claims, wherein the request message (RM) defines which type of software component of the given software should be identified.

7. System (100) according to one of the preceding claims, wherein the frontend data (FD) comprise information about at least one function called through a user interface (UI) when running the software.

8. System (100) according to claim 7, wherein the backend data (BD) comprise information about the workflow and dependencies of the at least one function.

9. System (100) according to one of the preceding claims, wherein the frontend (FD) and/or backend data (BD) are stored in a vector database (VDB).

10. Computer-implemented method for processing a given software (SW), the method comprising the steps:
- receiving (S1) a request message (RM) provided in natural language, wherein the request message comprises at least one request for identifying at least one separate software component of the given software considering a given software architecture,
- collecting (S2) frontend data (FD) when running the software (SW),
- collecting (S3) backend data (BD) when running the software (SW),
- running (S4) an artificial intelligence model (AIM), wherein the artificial intelligence model is configured to process the request message (RM) using the collected frontend data (FD) and backend data (BD),
- returning (S5) by the artificial intelligence model (AIM) a new software architecture diagram (SAD) and respective software code (CD) comprising at least one identified software component (COMP), wherein the new software code (CD) is provided according to the specified software architecture,
and
- providing (S6) the new software architecture diagram (SAD) and the respective software code (CD) comprising the at least one identified software component (COMP).

11. Computer program product directly loadable into the internal memory of a digital computer, comprising software code portions for performing the method steps of claim 10 when said computer program product is run on the computer.
